Europäisches Patentamt

(19) European Patent Office

Office européen des brevets

(11) Publication number: **0 094 509**
**B1**

(12) **EUROPEAN PATENT SPECIFICATION**

(45) Date of publication of patent specification: **15.07.87**

(21) Application number: **83103654.6**

(22) Date of filing: **15.04.83**

(51) Int. Cl.⁴: **E 21 B 17/042, E 21 B 17/08, E 21 B 19/16**

(54) **Coupling for tubing or casing and method of assembly.**

(30) Priority: **19.05.82 US 379615**

(43) Date of publication of application:
**23.11.83 Bulletin 83/47**

(45) Publication of the grant of the patent:
**15.07.87 Bulletin 87/29**

(84) Designated Contracting States:
**DE FR GB NL**

(56) References cited:
**GB-A- 392 827**
**GB-A-1 160 282**
**US-A-2 907 589**
**US-A-3 047 316**
**US-A-3 054 628**
**US-A-3 253 841**
**US-A-3 339 945**
**US-A-3 472 533**
**US-A-3 489 437**
**US-A-3 620 555**
**US-A-3 850 461**
**US-A-4 009 893**
**US-A-4 026 583**
**US-A-4 253 687**

(73) Proprietor: **Carstensen, Kenneth J.**
**4540 North 44th Street 70**
**Phoenix Arizona 85018 (US)**

(72) Inventor: **Carstensen, Kenneth J.**
**4540 North 44th Street 70**
**Phoenix Arizona 85018 (US)**

(74) Representative: **Eisenführ & Speiser**
**Martinistrasse 24**
**D-2800 Bremen 1 (DE)**

Courier Press, Leamington Spa, England.

## Description

Oil well pipe and casing are examples of tubular products used in production wells that are subjected to particularly stringent operating conditions. They must, for example, withstand extremely high mechanical loads when connected together in a long string, and at the same time be substantially unaffected by both internal and external pressures and corrosive environments. The extremely high pressures encountered, for example, can cause differential deformation of the threaded pin end of a pipe relative to the receiving collar if the pressurized gases or liquids penetrate between the threaded regions, sometimes causing decoupling of the string. One obvious response by those in the art to these conditions has been to employ special coupling arrangements, based on high strength sections and square or rectangular threads, such as shown in US—patents 4,009,893, 4,154,466, 4,209,193 and 4,253,687.

The practical state of the art is shown in a book widely used in the oil industry entitled "Tubular Connection Data", published by Weatherford/Lamb, a Weatherford International Company, 2nd edition, copyright 1978. This book depicts the great majority of couplings that are currently in field use today, including standardized American Petroleum Institute (A.P.I.) "8 round" and "buttress" tubing, and a number of specialized couplings using internal seals in the threaded region, corrosion barriers and the like.

While the special box (collar) and pin (pipe or casing) couplings are of theoretical benefit, they are of far less practical utility because they are nonstandard and expensive. There is today a vast inventory of A.P.I. pipe of 8 round and buttress type in different grades and weights which must be kept in use for obvious economic reasons. Equally obviously, the procedures used at the pipe rack and on the rig floor should involve a minimum number of conventional steps, and be quick, convenient and inexpensive to implement. It is particularly desirable to expand the range of field conditions under which A.P.I. pipe can be used while reducing the number of circumstances under which special equipment or instrumentation is needed. For more critical situations, equipment can be employed which counts turns, monitors torque or measures bearing pressures during makeup. Measurement of torque is not an accurate guide to engagement, because friction factors, thread profile and pitch, thread smoothness and lubricity all have an effect on the reading. When makeup is complete, instrumentation systems can be used to test the integrity of the seal with gas or liquid. Using both categories of equipment together is extremely costly but even where used does not permit expansion of the role of A.P.I. tubing. In a joint that is very tightly made, the entering end of the pin is highly stressed, approaching the yield point at this thinnest portion of the tapered thread. A slight inattention on the part of an operator results in overstressing or galling of the pipe. Even with proper makeup galling or permanent deformation occurs in the forward threads on the pin after a few engagement operations. Consequently there is an inherent limit to the usage of increased bearing pressure to assure a pressure seal. Even more, reliance on a tight thread engagement for sealing is essentially unreliable because of tolerances that must be accepted, thread damage and other non-informities. Recognition of these factors has led to the widespread usage of field instrumentation mentioned above.

The practical operating and cost requirements focus attention on crucial specific problems involved in making up secure leak-free joints under field conditions. A.P.I. pipe has a specified length and taper angle of thread on the box and pin, and includes defined acceptable tolerances for the tapers. The collar or box has inner diameter threads which taper inwardly from each end to a threaded mid-region or crest of smallest inner diameter, such that the pin can be threaded into a penetration depth which is limited only by the forces which can be exerted during makeup. With A.P.I. pipe, assuring proper coupling of the pin to the box on the rig floor presents significant problems. The "last scratch mark" of the threaded region defines a reference against which the nominal depth of insertion can be gauged, but it is not practical to monitor last scratch position in the fast paced and environmentally imperfect conditions under which extremely long strings of production tubing and casing must be assembled. Moreover, many imperfections and defects relate to sealing problems and prevent use of pipe for this reason only even though mechanical engagement may be adequate. Under present practice such pipe can be used in only very limited ways or must be scrapped.

Details as to standard A.P.I. pipe can be found in A.P.I. Spec. 5A, 37th edition, May 1984 and in A.P.I. Standard 5B (10th edition), March 1979 and Supplement 1 thereto issued March 1980, these documents being issued by the American Petroleum Institute, Production Department, 211 North Ervay, Suite 1700, Dallas, Texas 75201. The standards define such factors as the angles of taper, pitch, profile, and effective thread length, as well as the plane of hand tight engagement and the plane of "vanish point" which defines a theoretical position for a power-tight makeup. The term "taper" is usually regarded as involving both the angle and the dimension of the pipe thread, which together determine the depth of penetration of the pin end into an ideal collar. In these standards, it should be noted that with round thread of buttress thread a space is necessary between mating thread profiles. In the round thread, for example, this is referred to as a "root helix", and this small clearance provides a continuous path through which leakage or buildup of a high pressure fluid can occur.

If the pin taper is at the opposite end of the tolerance limit from the box thread taper, or if the dimensional variations are at opposite tolerance limits, then adequate thread engagement may occur either well before or well after the nominal position defined by reference to the last scratch mark. The assumption that adequately firm thread engagement will provide the needed internal and external seal is not a satisfactory basis for makeup because of the problems of thread damage and pressure buildup within the root helix at the extremely high pressure that are encountered.

It should be noted, as evidenced by US—patents 2,980,451, 3,047,316, 3,054,628, 3,831,259 and 3,923,324, as well as some of the earlier referenced patents, that is has been common for a long time to utilize seal elements positioned within the threaded region of a pin and box junction.

Such seals are generally referred to in the industry as Atlas-Bradford seals, and their benefits must be weighed against their disadvantages. They are incorporated in a portion of the threaded structure, which means in turn that they reduce both the length of thread engagement and the wall diameter. Furthermore, they introduce internal stress rises in a critical portion of the thread engagement zone. In addition, the threads of an entering pin deform or tap through the seal, and it is found in practice that an imperfection or irregularity can cause the seal to become caught and either disengaged or destroyed during makeup. Such seals are also disposed against the external end of the threaded region and equally provide a barrier to the release of internal pressure. This in turn means that an internal pressure can penetrate between the opposed pin and box threads throughout most of their lengths, and can cause the differential deformation that might lead to decoupling of the string.

Other coupling designs are based on the used of metal-to-metal seals at one or both ends of the threaded region. Since metal-to-metal seals require an almost perfect mirror finish, contact between metal surfaces does not always provide a reliable seal, particularly under field conditions, because of galling, scratches, or other damage that might occur to one or the other of the surfaces. Furthermore, when surfaces must be precisely placed with the degree of accuracy required for these seals, the product cost is increased by multiple, rather than fractional, amounts, under actual operating conditions, penetration of a corrosive high pressure fluid into the threaded engagement region over a substantial period of time may not only have catastrophic effects, but may create time consuming problems because of corrosion of the threads, drying out of the pipe joint compound or lubricant, and weakening of the coupling. External pressures can also act adversely on the coupling system. Leakage in a casing may, for example, surround an encompassed tubing with a high pressure, low flow environment that is of substantially higher pressure than the interior of the tubing. Such pressures can build up within the threaded portion of the coupling and have the previously mentioned adverse effects.

US—A—2 907 589 provides a coupling with a collar for use with special, upset pipes. These pipes have a non-tapered threading on the pin, which threading is cut away, as is the innermost threading of the collar, in order to provide a recess for reception of an axially extending packing. The packing is not engaged by either the threading of the collar nor of the pin end portions. No end seal means are provided, the sealing effect of the coupling relying entirely on the metal-to-metal engagement between the pin frontal ends and the angular stop shoulder of the collar, and on the sealing action of the packing.

In GB—A—392 827, there is disclosed a pipe upset at the pin, so that the threading can be cut into the upset, thickened end of the pipe. This upsetting provides a sufficiently massive pin and a large friction face for metal-to-metal sealing. No central sealing means are provided. Sealing is achieved by metal-to-metal contact of the friction face of the pin with a special excentric metal ring abutting against an annular inwardly projecting central member of the collar. The ring is of a much greater hardness than that of the end of the pin.

US—A—3 339 945 discloses a coupling, wherein a plastic mass provided on the inside of a collar is fused after insertion of an internally plastic-coated pipe into the collar with the internal plastic coating thereof.

From US—A—3 472 533, it is known to provide a coupling collar for plastic-lined metal pipe with a center metal ring coacting with two elastomeric rings, which are compressed, on insertion of the pipes into the collar, and fill the voids between pipe ends, collar and metal ring.

US—A—3 253 841 discloses another coupling for lined pipes, wherein the liner end sections project from the metal type and are clamped, in an outwardly upturned configuration, between the corresponding pipe end and a center seal ring of the coupling collar.

Despite all of the efforts which have been exerted toward improvement of designs and rig floor assemblies, there still remains a need for improved couplings that can be used with existing inventories of A.P.I. pipe. Furthermore, such improved couplings should facilitate reliable and uniform pipe makeup on the rig floor and require no more time than is presently used for standard pipe makeup. There is also need for precise sealing and mechanical engagement in other contexts as well, such as pipe lines using A.P.I. couplings. In some long pipe lines threaded couplings are used because corrosive fluids require plastic coatings that would be damaged by welding temperatures. Extremely high stresses may be introduced along the pipe axis by thermal expansion and contraction, but at the same time, the pressure seal must be maintained.

Threaded couplings in accordance with the invention incorporate a pipe coupling collar for standard A.P.I. round or buttress pipe; the pipe having threads of predetermined, but varying diameter and taper in a threaded region terminating in a bevel at the nose end and in a last scratch region at the opposite end; the collar comprising oppositely tapering threaded regions extending from a central region and terminating in end recess portions that have inner diameters greater than the outer diameter of the inserted pipe, the threaded regions of the collar mating with the threads of the pipe; the collar being provided with an internal centrally disposed reference member with axially separated reference shoulders, central seal means adjacent opposite sides of the reference shoulders, end seal means disposed in each of the end recess portions of the collar and engaging and sealing the pipe at the opposite end of the thread thereon when the pipe is fully inserted to the reference shoulders, the mechanical engagement region of the threads not being interrupted by seals and there being no thinning of the collar in the thread engagement region; and the collar threaded regions further engaging the pipe threads with desired bearing engagement when the pipe end engages the reference shoulder while the central seal means engage in and seal at the bevel of the standard pipe at the inserted end.

Thus metal-to-metal contact assures a precise axial position in which there is full dimensional engagement of thread surfaces, while the threaded region is sealed off by compressed seals and solely required to react against axial stresses along the pipe. Neither internal pressure within the pipe or external pressure can penetrate into the threaded region. However, at the same time, a selected bearing pressure may be established for a given axial stress by selection of a collar having a particular spacing between the reference surfaces on the internal centrally disposed reference member. If the interior seal is damaged or lost, the external seal still provides a barrier to a predetermined pressure threshold. However, if pressure continues to build up, the exterior seal releases to vent to the outside, this seal again becoming effective against external pressure thereafter. The internal ring surface may be disposed flush with the internal diameter of the pipe, reducing internal turbulence to a minimum.

In one embodiment of a coupling in accordance with the invention, the collar is an A.P.I. collar having a removed central crest region defining a central cylindrical seating region, wherein the pair of central seal means comprise an interior seal ring disposed within the seating region and having a center region of substantially constant inner diameter and tapered seal surfaces at each axial end thereof, and a precision position ring member forming the internal centrally disposed reference member is disposed within the interior seal ring in contact therewith, and is provided with reference shoulders on opposite axial ends thereof proximate each of the different seal surfaces.

Thus the seal ring mates with side bevels of engaged pins. At the end recesses of the collar, outside the load bearing region, grooves are provided to receive elastomeric seal rings. These rings engage the pin just outside the last scratch mark and compress further in response to external pressure. However, they also release outwardly in response to internal pressure in excess of a predetermined threshold, while thereafter retaining their effectiveness as external seals. The grooves in which they are seated have side walls forming a diverging angle so as to provide frictional restraint against rotation of the seal ring during pin engagement.

In another embodiment of a coupling in accordance with the invention, the internal centrally disposed reference member is a metal ring portion integral with the collar, the collar further including a pair of interior seal areas adjacent the juncture between the reference shoulders of the ring portion and the respective adjacent threaded portions in the collar and the central seal means comprising a pair of ring seals each disposed in a different one of the seal areas. Such collars provide greater resistance to bending, and expansion due to mid-region pressure, and may therefore be used with benefit in directional wells. In using these collars to make up pipe strings, adequate seals and thread engagement are both assured simply by assuring metal-to-metal contact of both pins against the respective reference shoulders of the position ring.

Couplings in accordance with the invention are particularly suitable for use with plastic coated pipe, because the abutting metal surfaces provide a complete plastic seal without special modification. In spraying the interior of the pipe and the internal centrally disposed reference member, adequate coating is applied to the side surfaces, so that when they are brought together and compressed, corrosive gases interior to the coupling are blocked even from the internal seal. Further in accordance with the invention, a ridged contact surface is provided on the reference shoulders of the internal centrally disposed reference member. An inserted pin end that is slightly canted relative to the plane of the reference shoulder tends to wipe and deform the ridged portion in reaching full engagement, so that complete contact is established. In accordance with a different feature, a modified or bullet-nose A.P.I. pipe may be matingly received by a modified collar using a two-piece seal ring and having a concave reference shoulder surface.

A method of coupling lengths of standard A.P.I. round or buttress pipe by means of a collar comprises, according to the invention, the steps of selecting a collar provided with a fixed or providable with a removable internal centrally disposed reference member with axially separated reference shoulders, the axial length of the reference member matching the axial stress to be encountered in usage of the tubing; engaging a first pipe into one end of the collar, either to a selected depth of penetration if the collar is to be provided with a removable reference member, and afterwards inserting the removable reference member within the collar in abutment with the first pipe, or, if the collar is provided with a fixed reference member, until the pipe end abuts against the fixed reference member, and engaging a second pipe into the second end of the collar into abutment with the facing surface of the reference member. Selection of proper reference shoulder position and modification of pipe collars, if necessary, are accomplished while making up half of the coupling away from the rig floor. One pin is threaded into a desired insertion position with adequate thread engagement but without excessive stress. For modified A.P.I. pipe the position may be defined by a temporary reference member which is thereafter removed so that a position ring may be placed in abutment with the nose of the inserted pin. In this position, the internal seal is contacted by the nose of the pin and the external seal is under compression at the root of the threaded portion of the pin. The position ring then defines the positional reference for the nose of the opposite pin. The only step required for makeup of the pipe length in the pipe string on the rig floor is to rotate the next pin into metal-to-metal contact with the opposed reference shoulder. At this point, both the interior and exterior seals are properly engaged on the newly inserted pin as well as the other half of the coupling. Existing collars may be modified at the pipe rack by removing the central crest portion of the threaded region and inserting a center seal ring. The internal central disposed reference member may be of selected length, so as to control the tightness of the makeup for given axial stress conditions.

Further in accordance with the invention, the tubing and collars are prescreened to provide that insertion positions will vary only within a limited range (e.g. ±1,3 cm (½ inch) total). A smooth interior taper on a reference ring that fits over a pin end is used to establish that the pin taper is acceptable, while a smooth reference cone may be used to make a similar check on the collar taper. The prescreening eliminates only a minor portion of pipe and collars meeting A.P.I. standards, but reliably establishes that pipe position relative to the collar will assure seal integrity and performance under tensile loads. In the course of coupling pipe to modified A.P.I. collars, precision reference elements are threaded into the collars to control the depth of insertion of the first pin in the collar. Thereafter, this element is removed, so that a seal and precision makeup ring can be inserted.

A better understanding of the invention may be had by reference to the following description, taken in conjunction with the accompanying drawings, in which:

Fig. 1 is a perspective view, partially broken away, of a coupling using modified A.P.I. elements in accordance with the invention;

Fig. 2 is a side sectional view of the arrangement of Fig. 1;

Fig. 3 is a cross-sectional view of the arrangement of Figs. 1 and 2 taken along the line 3—3 in Fig. 2;

Fig. 4 is an enlarged fragmentary side sectional view of the threaded region in the arrangement of Figs. 1—3;

Fig. 5 is a fragmentary sectional view showing an end seal in uncompressed form;

Fig. 6 is a perspective view, partially broken away, of a different coupling in accordance with the invention;

Fig. 7 is a side sectional view of the arrangement of Fig. 6;

Fig. 8 is a cross-sectional view taken along the line 8—8 in Fig. 7 and looking in the direction of the appended arrows;

Fig. 10 is an exploded fragmentary view of a different example of a coupling in accordance with the invention used with bullet-nosed pipe;

Fig. 11 is a side sectional view of the assembled construction of Fig. 10;

Fig. 12 is a side sectional view of an example of the invention as utilized with plastic coated pipe;

Fig. 13 is a perspective view of a modified precision makeup ring that may be utilized to compensate for pin irregularities;

Fig. 14 is a perspective view, partially broken away, of a precision reference cone ring that may be used in assembly techniques in accordance with the invention;

Fig. 15 is a perspective view, partially broken away, of a precision reference cone plug that may be used in assembly techniques;

Fig. 16 is a perspective view of a reference insertion plug that may be utilized in assembly techniques in accordance with the invention; and

Fig. 17 is a flow diagram of steps that may be employed in methods in accordance with the invention.

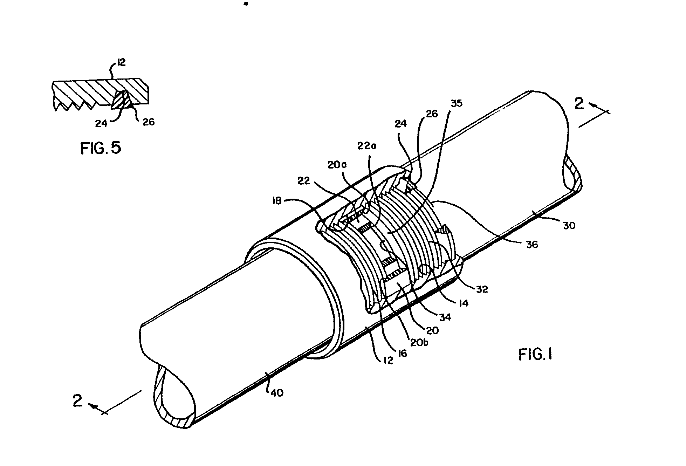

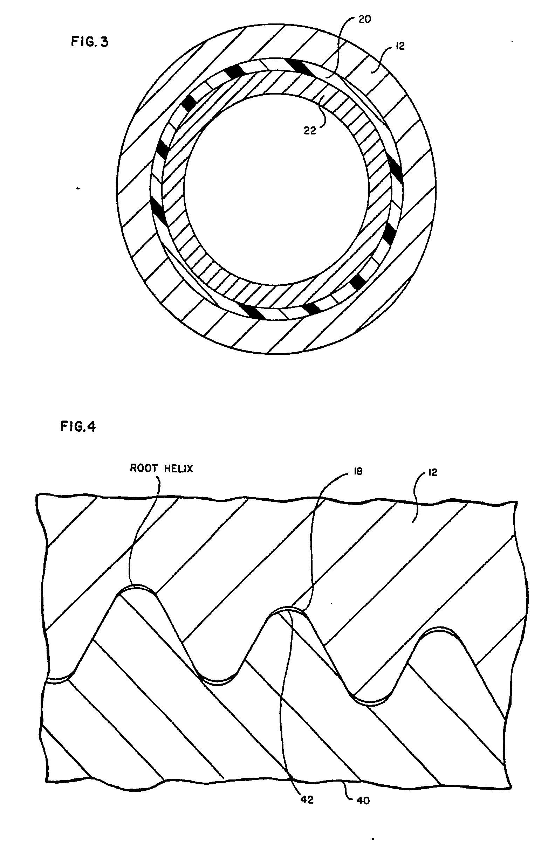

In accordance with the invention, referring now to Figs. 1—5, a coupling 10 for production wells comprises a modified—A.P.I.—type tubing or casing. The collar 12 has conventional first and second threaded tapers diverging from the central collar region, the dimensions and tolerances being within the specified A.P.I. limits. In the standard A.P.I. collar the threaded tapers 14, 16 come together at a central crest region, which in accordance with the invention is machined out to provide a center land 18 which forms a seat for an interior seal ring 20 having tapered edges at each side. This seal ring is preferably made of a material sold as "RYTON" by the Du Pont Company of Wilmington, Delaware. This material is an elastomer that is displaceable under applied force and pressure to provide a leak free seal, and is capable of withstanding the corrosive chemicals, such as hydrogen sulfide, pressures and temperatures encountered in deep completion operations. It also expands (up to 3%) under high temperature conditions, providing a better seal in more critical environments.

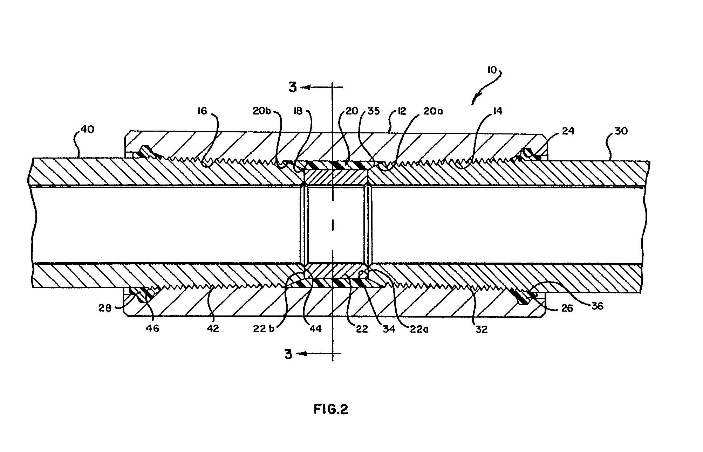

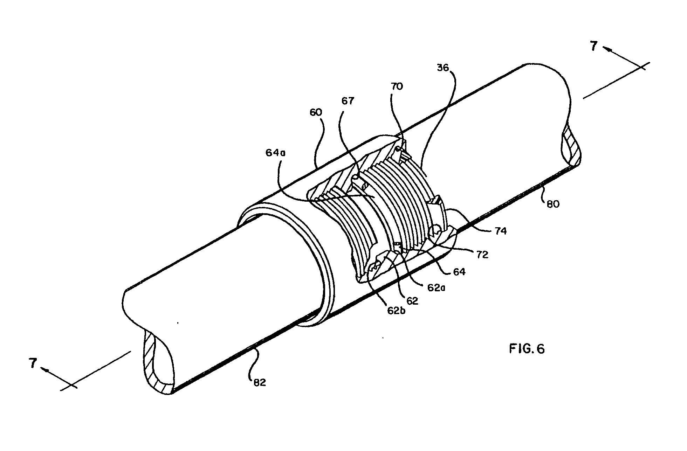

Within the interior seal ring 20 is disposed a precision position ring 22 having a longitudinal dimension along the axis of the collar 12 that is selected for the particular type and size of collar that is used, also with a thickness to match the wall thickness of the pipe body to be used. As descibed below, the weight and grade of pipe being used, together with the bearing pressure desired for makeup, determine the axial spacing that is to exist between the reference shoulders 22a, 22b. The pipe wall thickness determines the radius of the position ring 22, in order that a flush profile can be established. At each outer end of the collar, in the "end recess" portion, immediately adjacent each threaded taper region 14 and 16, is machined an end groove seat 24 within which is seated an exterior seal ring 26. The pin end of a first pipe 30 is threaded into the collar 12 such that the threaded taper 32 on the pipe 30 is in secure engagement with the opposed threaded taper 14 of the collar, with the nose 34 of the pipe 30 being in engagement with a first reference shoulder 22a on the ring 22. The manner in which the depth of engagement of the first pipe 30 may be controlled is described in detail hereafter. However, when properly positioned, the nose 34 of the first pipe 30 not only engages the first reference shoulder 22a, but compresses the side surfaces of the interior seal ring 20. A 25° bevel surface 35 on the pipe 30 adjacent the nose 34 engages a similar beveled seal surface 20a on the center seal ring 20 forming a firm seal against high interior pressure. The last thread region 36 of the first pipe 30, i.e. the region of maximum diameter adjacent the threaded taper 32 concurrently engages the exterior seal ring 26, compressing it inwardly relative to the collar 12. This forms a firm seal that is only further compressed by exterior pressure. As best seen in Figs. 2 and 5, the side surfaces of the seal ring 26 taper outwardly at approximately a 60° angle from the end groove seat 24 in the end recess of the collar 12. This is a mechanically unloaded portion of the collar, being outside the threaded region, and can readily withstand the external pressures that are likely to be exerted. The diverging angle on the seal 26 provides a greater surface area of contact against the bottom and side walls of the end frictional engagement. A lubricant may be spread on the inside of the seal ring 26, so when it is engaged by the last thread region 36 of the pipe 30, the beveled side edges and narrow end of the seal ring 26 frictionally engage the groove seat 24, substantially eliminating any tendency of the seal ring 26 to rotate or do anything other than compress relative to the inserted pipe 30.

In similar fashion, a second pipe having a threaded taper 42 in engagement with the second threaded taper 16 on the collar, abuts the second reference shoulder 22b, and its nose 44 compresses the tapered side surface 20b of the interior seal ring 20, while its base 46 compresses the second exterior seal ring 28. It will be appreciated that thread lubrication compound is used in the threaded engagement regions, being applied prior to makeup. Further, the amount of deformation of the various seals can be greater or less than is shown (the drawings are not to scale), inasmuch as internal and external pressures respectively merely act on the seals 20, 26 and 28 in senses that tend to increase the integrity of the seal.

With this structure in accordance with the invention, a coupling is provided that satisfies a number of requirements that have hitherto involved limiting compromises. Load bearing strength is provided by virtue of precise thread engagement, which is established by metal-to-metal contact between the noses 34, 44 of the pins and the facing references shoulders 22a, 22b. Pipe tolerances are adequate to insure load-bearing strength, even though a high pressure seal may not exist in the threaded area from bearing pressure alone. However, the sealing requirements are met concurrently, because with the pipe ends being positioned accurately, the interior seal 20 and the exterior seals 26 and 28 are engaged and compressed securely. Consequently the threaded engagement region is not under ordinary circumstances exposed to any such leakage. Concurrently, the interior surface of the position ring 22 lies flush with the interior surface of the pipes 30, 40, so that flow passing along the string does not encounter a turbulent region in the middle of the coupling. In addition, the abutment of the pipe noses against the opposite reference surfaces 22a, 22b of the ring 22, provides a constricted path that considerably limits any tendency of internal pressurized gases or fluids to penetrate outwardly.

At the outer ends of the collar 12, the exterior seal rings 26, 28 are so shaped and positioned that they are compressed by the last thread regions 36, 46 of the engaging pipe. Exterior pressure again increases the integrity of the seals. In the event that the interior seal 20 is damaged or defective, so that leakage of internal fluid passes into the threaded region, distortion of the exterior seal rings 26, 28 is adequate to limit outward leaks up to a certain pressure limit. Selection of the size and shape of the exterior seals 26, 28 is readily variable to provide resistance to internal pressures of a selected amount. A slight taper to match the thread taper and an inner diameter that is sufficiently large to clear the pipe threads to about the mid-region are best seen in the uncompressed state evidenced in Fig. 5. These geometries provide firm sealing in response to external pressures, but adequate deformation to release internal pressures in excess of a selected level, here about $1,38.10^7$ N/m² (2000 psi). Size and taper variations may be used to increase or decrease the chosen threshold level. Consequently, at internal pressures in excess of the selected threshold, the gases are vented outside the tubing rather than having the coupling come completely loose. The seal rings 26, 28 maintain their integrity and, when venting has ceased, again function as effective barriers against external pressure.

From the standpoint of mechanical loading stresses arising in a long tubing or casing string, therefore, it is not necessary with this concept to provide an extremely tight makeup in order to establish a leak-free seal. Bearing stresses can be defined solely in terms of the axial load (e.g. length and weight of string) to be utilized. This therefore constitutes a marked departure from accepted practice, in which the end region of a pipe is stressed to approach the yield point so as to assure a leak-free seal, with the resultant galling, reduction of number of uses and dangers of overstressing that can occur. Production rig testing procedures, such as those which test a coupling by exposing it to high pressure gases which are then sensed for leakage or fluids such as water or water treated with soluble oil, are furthermore needed in fewer situations. For the same reason, A.P.I. standard pipe can be used for a wider range of applications involving higher pressures and axial stresses. The much more expensive couplings and pipe currently employed for extremely long tubing or casing strings and high pressure applications can be confined to a smaller number of the more critical situations. Pipe with imperfections and defects pertaining to the sealing functions only may now be usable.

Selection of grade and weight of tubing for a particular application can thus be accompanied by a selection of the degree of engagement required for particular casing and completion conditions. For example, some gas wells require only short strings, but are at extremely high pressures, and for these applications axial stress loading is much less than for extremely long strings. Consequently, for such applications a lesser tightness of thread engagement is used, so that both assembly and disassembly of tubing strings can be accomplished more rapidly. For this purpose, systems in accordance with the invention can utilize one of a number of available precision makeup rings. A set of four different axial length sizes of precision makeup rings 22 and seal rings 20 are sufficient to cover all ranges of application. In the present example, for 8 round A.P.I. pipe, these vary from 1,88 cm ($\frac{3}{4}''$) for the smallest to 3,13 cm ($1\frac{1}{4}''$) for the largest. In other words, couplings which are to withstand high stress can be given two turns (1 turn=0,31 cm ($\frac{1}{8}''$)) more on each pin relative to the couplings which are least firmly engaged and which therefore have longer makeup rings. Any intermediate spacings that are desired can be used between these limits, but only two intermediate dimensions between the limits (four in all) are generally found sufficient. By changing the length of the seal ring 20 correspondingly the beveled surface 20a providing the interior seal still securely engages the side bevel adjacent the nose of the pin. It will be recognized that the seating area established by removing the crest of the threads is also similarly proportioned.

In systems in accordance with the invention, it should be noted that pipe taper is the only significant variable, both dimension and angle being encompassed. Techniques are disclosed hereafter for testing whether pipe tapers are within an acceptable range, with a minor proportion of pipe being rejected for this reason. Having prescreened the pipe for this characteristic, the metal-to-metal contact that is positively assured when the pin noses engage the adjacent reference shoulders automatically insures both the internal and external seals. It should further be noted that there are no internal stress risers introduced by the sealing structure, that the full integrity of thread engagement is maintained, and that all conventional features of operation are maintained. Coupling of the collar to the pipe to the hand tight plane remains as before. If permissible under field conditions a visual check may be made of the last scratch position relative to the collar when engaged.

With modified A.P.I. structures in accordance with the invention, existing stock can be converted to improved coupling simply by removing the threads in the center crest to provide the center seal seat 18 and by machining the end groove seats 24 in the end recesses of the collar 12. The prefabricated center seal ring 20 and the exterior seal rings 26, 28 can be inserted by hand, but the precision position ring 22 requires considerable force to insert in position against a reference surface, as described hereinafter. This type of work can all be accomplished at a pipe rack or pipe storage facility and requires no special machining procedures because this type of equipment is used in regular assembly, inspection and maintenance of pipe.

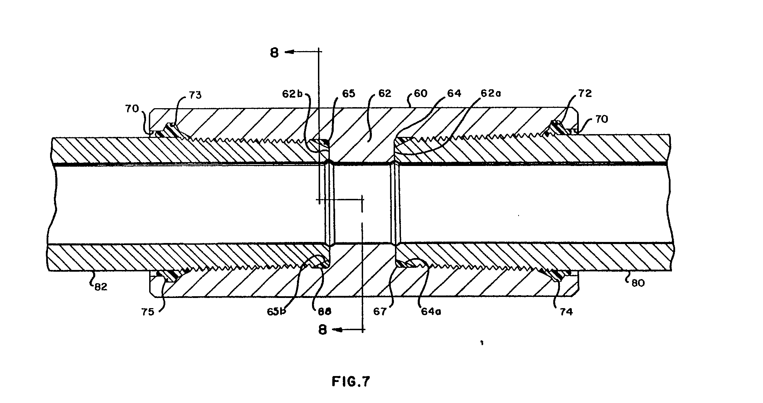

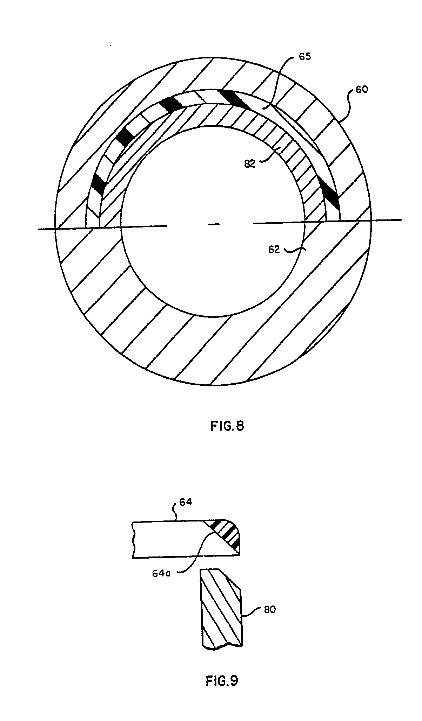

Where a factory supplied collar 60 is to be used, the construction may be as shown in Figs. 6—9, to which reference is now made. The collar 60 incorporates a central position reference ring 62 that is integral with the collar 60 body and has an innercircumference flush with the innercircum-ferences of engaged pipe, and end shoulders 62a, 62b that are axially separated by a selected spacing. Four different spacings within a predetermined range may again be used for providing different makeup tightness, as described previously. First and second center seals 64, 65 are positioned in grooves 67, 68 each disposed between a different end shoulder 62a or 62b and the adjacent threaded portion of the collar 60. These seals 64, 65 include beveled surfaces 64a, 65a for mating with the 25° side bevel surfaces on the pipe, as previously described.

At the end recesses 70 of the collar 60, a pair of groove seats 72, 73 retain end seals 74, 75 as previously described.

It may be seen that the construction of Figs. 6—9 has all of the characteristic advantages of the arrangement of Figs. 1—5. Full but not excessive thread engagement is assured when the first and second pipes 80, 81 are fully engaged with nose-to-metal contact with the end shoulders 62a, 62b respectively. Concurrently, secure center and end seals are established as previously described. This unit has the additional advantage of providing greater versatility in assembly, because precise couplings can be fully made on the rig floor. In addition, the manufactured coupling has a thick integral center section and therefore is much stronger in bending, and much more resistive to expansion due to internal pressures. Consequently such couplings are preferred for use in situations in which the string has a high slant angle or changes in direction combined with high pressure.

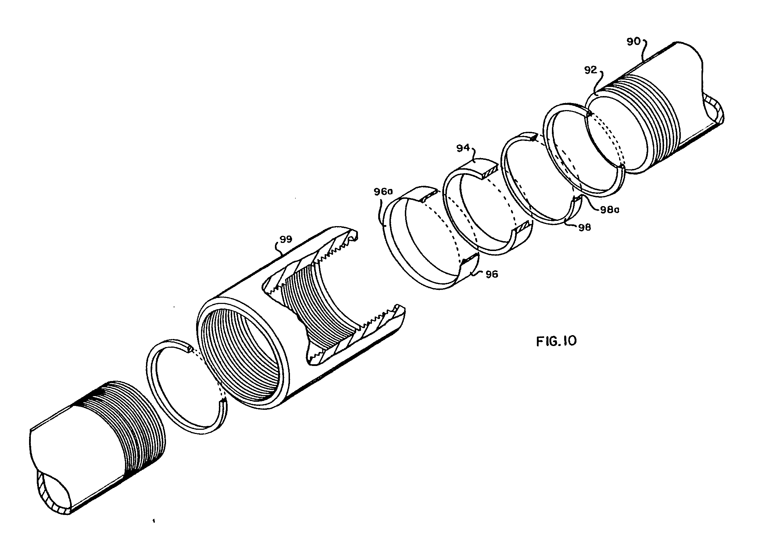

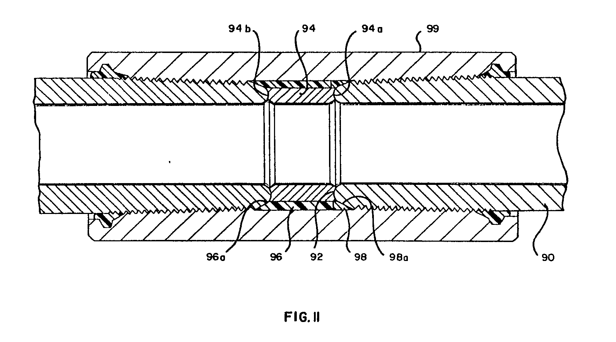

The system is also amenable to usage with so-called bullet-nosed pipe, as shown in Figs. 10 and 11. Bullet-nosed pipe 90 has had the pipe end 92 machined to a convex configuration as opposed to the flat end and side bevel previously described. Fo this type of pipe 90, the precision makeup ring 94 incorporates concave side reference surfaces 94a and 94b while the center seal is fabricated in two parts of a principal seal ring 96 having a concave side seal surface 98a. As shown in Fig. 10, the side seal surfaces 96a and 98a in the uncompressed condition are oversize relative to the precision makeup ring 94, and internally projecting portions of the concave side surfaces 96a, 98a would be damaged if the ring 94 were forced in over them. Thus this unit is assembled first by putting in the principal seal 96, sliding the makeup ring 94 over the flat interior surface on the principal ring 96, and thereafter inserting the minor seal ring 98 so that there is full metal and seal contact to the bullet noses of the pipe 90. The collar 99 remains as described above in conjunction with Figs. 1—5.

The example of Fig. 12 illustrates important advantages of constructions in accordance with the present invention for plastic-coated pipe, which is now much widely used for the superior resistance of the pipe to extremely corrosive environments. The practice generally is to roughen the interior surface of the pipe so as to provide better adhesion of the temperature and corrosion resistant synthetic polymer-based mixture (e.g. "RYTON") that is used. In addition, masking techniques are used to apply plastic from the inside of the pipe in a path that extends around the nose and beveled sections and to two or three threads of the pipe. With stand A.P.I. pipe couplings the danger regions are at the corners encountered at the pipe ends, because of the fact that the applied plastic is thinner in these regions, and at the threaded portions, because thread engagement when inserted into the collar tends to tear and crack rather than compress the plastic.

In accordance with the invention, as shown in enlarged form in Fig. 12, a first pipe 100 having an adhering plastic layer 102 on the inside surface will also receive a lesser amount of overspray 104 at the nose end corner of the pipe 100. A second pipe 106 has a similar interior layer 108 with an overspray region 110 immediately adjoining at the pipe nose. This is all of the marginal coating that is required, inasmuch as the precision makeup ring 112, having an internally roughened surface, also includes an interior surface layer 114 of plastic, some of which extends onto the side edge surfaces as lip surfaces 115, 116. Thus, when metal-to-metal contact is established, the overspray 104 and 110 areas on the pipe 100, 106 respectively are compressed against the plastic lip surfaces 115, 116, compressing and displacing the surfaces to provide a complete seal along the length of the pipe. In addition, the flush inner surface of the ring 112 with the pipe inner circumferences greatly reduces the turbulence in this area, and the high velocity forces that would otherwise act on the pipe edges, where the plastic coating would be the most thin.

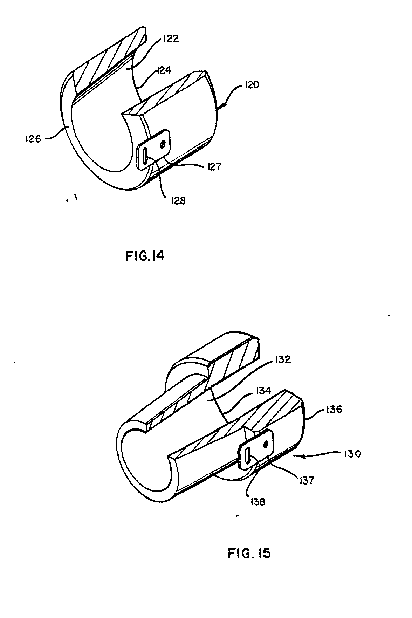

Field use of systems and devices in accordance with the invention is greatly facilitated by prescreening of pipe so that pipes which have excessively shallow or steep tapers are not used. A.P.I. standards permit degrees of taper variations which are sufficient to allow combinations at opposite extremes (shallow taper on the collar with a steep taper on the pin or vice versa) of ±2 threads, which gives a total variation of 1,3 cm (one-half inch). In accordance with the present invention, however, it is desired to use pipe whose taper varies so as to give a maximum difference of one thread on the maximum side. This constitutes a maximum variation of 0,31 cm (one-eighth inch) from the nominal position, and solely arises from the taper, not the condition or the tolerances of the threads themselves. Field experience has shown that only 2% to 6% of pipe manufactured to A.P.I. tolerances will not meet this requirement, but this factor must be checked in the field, at the pipe rack or similar station, prior to engagement of the collar onto the pipe. The ring 120 of Fig. 14 and the plug 130 of Fig. 15 provide convenient mechanisms for this prescreening.

The gauge ring 120 of Fig. 14, to which reference is now made, includes an interior conical surface 122 tapering from a wider end 124 to a narrower end 126 of the ring. An ear 127 attached adjacent the narrower end 126 includes a viewing window 128 having an axial length along the central axis of the ring 120 that corresponds to an acceptable range of displacements for the nose end of a pin inserted into the opening defined by the interior conical surface 122. When the ring 120 is fitted over the nose end of a pipe which has a shallower taper than a standard defined by the smooth interior conical surface 122, (the diameter of the pipe being substantially invariant) the ring 120 will not slip over the threaded portion until the pipe end is within the center of the viewing window 128 as desired, but will instead be closer to the smaller end 126 of the cone 120. If, on the other hand, the taper is sharper or steeper than the desired standard, then the end of the pin will penetrate past the center of the viewing window 128. In either event the pipe is unacceptable if the nose does not rest somewhere within the boundaries of the viewing window 128.

In like fashion, a gauge plug 130 may be used for checking the taper on the collars. A smooth conical surface 132 tapers together from an insertion end 134 within a larger base 136, from which extends an ear 137 incorporating a viewing window 138 if the taper on the collar is too shallow, the penetration will be less, and the end of the collar will not reach the viewing window 138, whereas if the taper is steeper the penetration will be past the viewing window 138. In both instances, the relative position of the end of the tubular member is directly dependent upon the taper, which is established by the smooth internal or exterior reference surface of the ring 120 or plug 130.

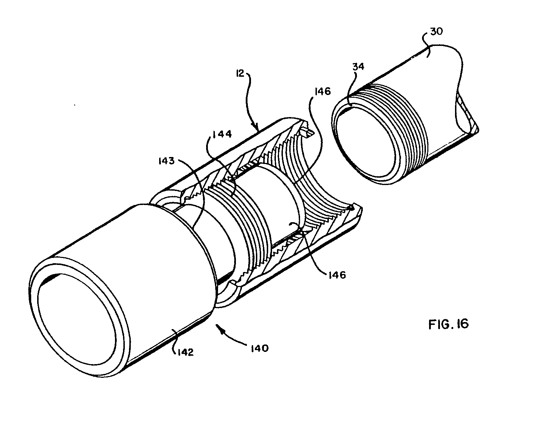

One other tool is valuable in assembly techniques in accordance with the invention, and this is shown as a preset plug 140 in Fig. 16. The preset plug 140 comprises a body portion 142 used for hand or machine tightening and removal with a bucking tool. Accordingly, the body 142 has a circular outer surface terminating in a reference shoulder 143 that lies in a plane normal to the central axis of the body. A threaded portion 144 stands coaxially from the body 142 to define a precision male threaded region for mating with an A.P.I. collar 12 of the desired type. An end 146 of the preset plug 140 projecting beyond the threaded portion 144 includes a replaceable hardened end face 148 which is precisely spaced apart from the reference shoulder 143. When the plug 140 is threaded into a collar 12, the reference shoulder 143 is engaged against the end of the collar. Then, the end face 148 is in a known position, defining the depth of penetration for the first pipe 30 to be inserted from the opposite end. The pipe 30 is simply tightened until metal-to-metal contact is obtained between the nose 34 of the pipe and the end face 146. Thereafter, with the pin 30 in position, the preset plug 140 is removed, so that a center seal and a precision makeup ring (not shown) can then be seated against the nose of the engaged pipe and the coupling fully readied for use on the rig floor.

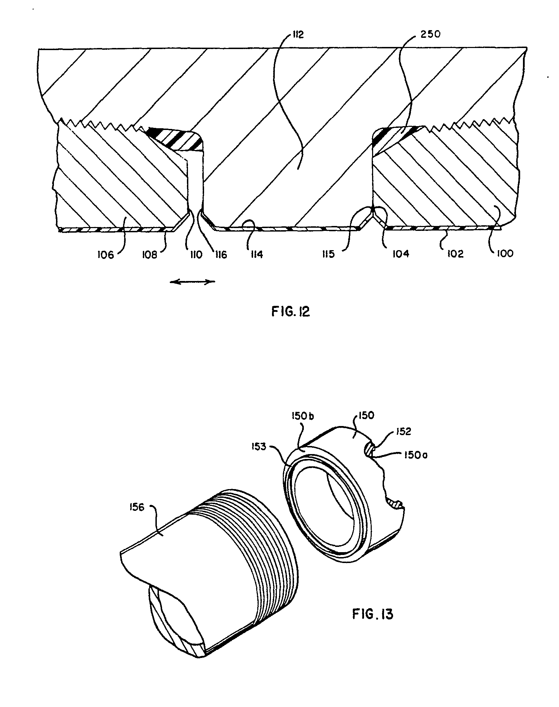

A modification of the precision position ring, which can be used on integral as well as inserted rings, is shown in Fig. 13. This ring 150 (shown as a separate insertable element for modified A.P.I. pipe for purpose of illustration only) has spaced apart reference shoulders 150a, 150b as previously described. However, these surfaces include concentric, centrally disposed, ridges 152, 153 respectively. If the nose end of an inserted pipe 156 is not in a plane precisely parallel to the opposed reference shoulder 150b, the forward edge of the nose tends to cut a deepening groove in the reference shoulder before full contact is achieved. This lack of parallelism occurs because the pipe end is not precisely cut off in fabrication and although it may not exceed a few mils, the discrepancy can have a greater effect on the precise positioning of the pipe 156 relative to the reference shoulder 150b and seals (not shown). When the deformable ridge is encountered, however, a wiping action takes place that conforms the contacting metal surfaces and assures full mating of the opposed elements around their peripheries on solid metal-to-metal contact.

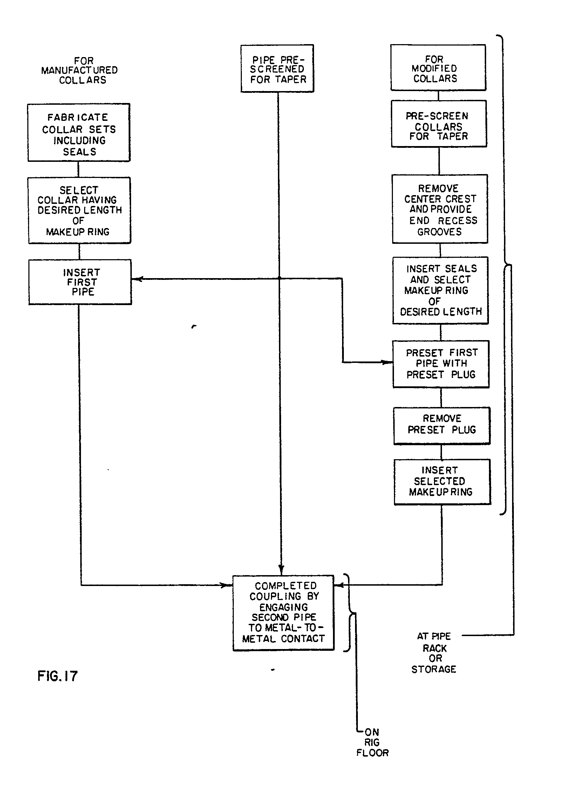

Methods in accordance with the invention, depicted in sequential form in Fig. 17, may use modified or manufactured collars as described herein, but in any event preferably prescreen the pipe. That is, the taper of each pin end is checked, using the reference ring of Fig. 14, to determine that the depth of penetration will be ±0,31 cm ($\frac{1}{8}$") relative to the standard. Only dimension and taper angle affect this determination, and it is not necessary to check thread pitch or profile. If a manufactured collar is to be used, it will previously have been prescreened for taper during quality control checks, and it is only required to select the degree of makeup tightness desired for the axial stress to be encountered. On the basis of length of string and other conditions to be encountered, the axial stress to be met is determined by operating personnel in terms of grade and weight of pipe and dimensional penetration of the taper for the couplings. Selecting the collar having a particular length of makeup ring is determined by these criteria. Makeup of the couplings merely requires engagement until metal contact is made, for both pins, and this can be done at the pipe rack for one pin or on the rig floor for the opposing pins. The precise dimensional control that is achieved assures full thread engagement for withstanding tensile loads, without dangers of overstressing or deformation. It is not necessary to attempt to achieve a "power-tight makeup" in accordance with A.P.I. procedures or to increase bearing pressure until adequate sealing against high pressure is obtained. The internal and external elastomeric seals that are concurrently established on dimensional engagement provide superior barriers against pressure differentials. Because they also isolate the threaded region, the importance of thread continuity is diminished and thread cuts, marks or irregularities previously regarded as imperfections sufficient to constitute rejectable defects may now present no significant problem. Thus, pipe previously rejected for such imperfections may now be usable in many applications.

Where an A.P.I. collar is to be modified the sequence is longer but the end result on final makeup is the same. The collars also are prescreened for taper, using the reference cone of Fig. 15, to assure that they are within ±0,31 cm ($\frac{1}{8}$") variance from standard. The acceptable collars are then modified by removing the central crest region of the threads to provide a seat for the center seal, and machining in the grooves in the end recesses. The center seating region is proportioned in length to the makeup ring and seal to be installed. The seal rings are then urged into position, which may be done manually, and the preset plug of Fig. 16 is inserted to maximum depth. The preset plug is chosen in correspondence to the makeup ring to be used, so that when fully engaged its end face is in the plane of full insertion of the nose end of a first pipe. By threading the first pipe into contact with the end face, the first pipe is precisely positioned and the preset plug may be removed. Insertion of the selected precision makeup ring into firm contact with the nose of the first pipe requires substantial force, so that a shouldered driving tool is used. When the makeup ring is in position, however, the coupling is ready to receive the second pipe on the rig floor. The crew need only stab and rotate each section into the prior section until metal contact is made with the makeup ring. This firm engagement alone is enough to assure a proper mechanical engagement and full sealing against both internal and external pressures.

**Claims**

1. A pipe coupling collar for standard A.P.I. round or buttress pipe;

—the pipe (30, 40; 80, 81; 90; 100, 106; 156) having threads of predetermined, but varying diameter and taper in a threaded region terminating in a bevel at the nose end and in a last scratch region at the opposite end;

—the collar (12; 60; 99) comprising oppositely tapering threaded regions extending from a central region and terminating in end recess portions that have inner diameters greater than the outer diameters of the inserted pipe (30, 40; 80, 81; 90; 100, 106; 156), the threaded regions of the collar mating with the threads of the pipe;

characterized in that the collar (12; 60; 99) is provided with

—an internal centrally disposed reference member (22; 62; 94; 112; 150) with axially separated reference shoulders (22a, b; 62a, b; 94a, b; 115, 116, 150a, b);

—central seal means (20; 64; 65; 96; 98; 250) adjacent opposite sides of the reference shoulders (22a, b; 62a, b; 94a, b; 115, 116, 150a, b);

—end seal means (26, 28; 74, 75) disposed in each of the end recess portions (24; 70) of the collar (12; 60; 99) and engaging and sealing the pipe (30, 40; 80, 81; 90; 100, 106; 156) at the opposite end of the thread (32; 42) thereon when the pipe (30, 40; 80, 81; 90; 100, 106; 156) is fully inserted to the reference shoulders (22a, b; 62a, b; 94a, b; 115, 116, 150a, b), the mechanical engagement region of the threads not being interrupted by seals and there being no thinning of the collar (12; 60; 99) in the thread engagement region

—and further characterized in that the collar threaded regions engage the pipe threads with desired bearing engagement when the pipe end (34, 44; 92) engages the reference shoulder (22a, b; 62a, b; 94a, b; 115, 116, 150a, b) while the central seal means (20; 64; 65; 96, 98; 250) engage in and seal at the bevel (35) of the standard pipe (30, 40; 80, 81; 90; 100, 106; 156) at the inserted end.

2. Collar according to claim 1, characterized in that the collar (12) is an A.P.I. collar having a removed central crest region defining a central cylindrical seating region (18), wherein the pair of central seal means comprise an interior seal ring (20) disposed within the seating region (18) and having a center region of substantially constant inner diameter and tapered seal surfaces (20a, b) at each axial end thereof, and that a precision position ring member (22) forming the internal centrally disposed reference member, is disposed within the interior seal ring (20) in contact therewith, and is provided with reference shoulders (22a, b) on opposite axial ends thereof proximate each of the different seal surfaces (20a, b).

3. Collar according to claim 1, characterized in that the internal centrally disposed reference member is a metal ring portion (62) integral with the collar, that the collar (60) further includes a pair of interior seal areas (67, 68) adjacent the juncture between the reference shoulders (62a, b) of the ring portion (62) and the respective adjacent threaded portions in the collar (60), and that the central seal means comprises a pair of ring seals (64, 65) each disposed in a different one of the seal areas (67, 68).

4. Collar according to any one of claims 1 to 3, wherein the collar is to receive internally plastic coated pipe, characterized in that the internal centrally disposed reference member (112) has a roughened inner diameter and a plastic coating (114) thereon, the plastic coating (114) at least partially extending over from the inner diameter around the corner onto the reference shoulders (115, 116).

5. Collar according to any one of claims 1 to 4, characterized in that the surfaces defining the reference shoulders (150a, b) include individual ridges (152, 153) concentric therewith, said ridges (152, 153) being deformable by the forward end of a pipe (156), the plane of the end of which is not precisely parallel to the plane of the reference shoulder (150a, b).

6. Collar according to any one of claims 1 to 5, characterized in that the collar (99) is adapted for bullet-nosed pipe (90), and the internal centrally disposed reference member (94) includes concave reference shoulder surfaces (94a, b) for mating with the end (92) of the bullet-nosed pipe (90), and the pair of central seal means comprise a two section central seal ring (96, 98), the collar (99) including a removed central crest region defining a seal ring seating area, with the central seal ring (96) further including a profile providing seal surfaces (96a, 98a) at each axial end thereof for mating with the abutting portion of a bullet-nose pipe (90), whereby the seal surfaces (96a, 98a) and reference member (94) may be positioned within the collar (99) without distortion of the seal surfaces (96a, 98a).

7. Collar according to any one of claims 1 to 5, characterized in that each of the central seal means (20; 64; 65) has an approximately 25° angle relative to the axis of the collar (12; 60) for engaging the bevel (35) of the pipe (30, 40; 80, 81; 100, 106; 156) to be inserted therein.

8. Collar according to claim 7, characterized in that the end seal means (26, 28; 74, 75) are disposed in end grooves (24; 72, 73) with side surfaces diverging at an included angle of approximately 60° to provide a high surface area relative to the received end seal means (26, 28; 74, 75) such as to maintain frictional contact so that the end seal means (26, 28; 74, 75) do not rotate during insertion of a pipe (30, 40; 80, 81; 90; 100, 106; 156).

9. Collar according to claim 8, characterized in that the interior surfaces of the end seal means (26, 28; 74, 75) are tapered to angles approximating those of the taper of the associated threaded region, and wherein the inner diameter of the end seal means (26, 28; 74, 75) is sufficiently large to pass over at least a portion of the threaded region of a pipe (30, 40; 80, 81; 90; 100, 106; 156) received therein.

10. Collar according to any one of claims 1 to 9, characterized in that the end seal means (26, 28; 74, 75) are deformable outwardly in response to internal pressures in excess of a predetermined level, such as to provide a venting of internal pressures.

11. Collar according to claim 10, characterized in that the end seal means (26, 28; 74, 75) return to position to provide sealing against external pressures after venting.

12. Collar according to any one of claims 1 to 11, characterized in that the interior circumference of the reference member (22; 62; 94; 112; 150) lies flush with the interior circumference of the pipes (30, 40; 80, 81; 90; 100, 106; 156).

13. Collar according to any one of claims 1 to 12, characterized in that the length of the reference member (22; 62; 94; 112; 150) is selectable within a predetermined range to control the dimensional engagement in accordance with axial stress to be encountered.

14. Collar according to any one of claims 1 to 13, characterized in that the end seal means (26, 28; 74, 75) are positioned to contact the pipe (30, 40; 80, 81; 90; 100, 106; 156) at approximately the last scratch area thereof.

15. Method of coupling lengths of standard A.P.I. round or buttress pipe (30, 40; 80, 81; 90; 100, 106; 156) by means of a collar (12; 60; 99), characterized by the steps of

—selecting a collar (12; 60; 99) provided with a fixed or providable with a removable internal centrally disposed reference member (22; 62; 94; 112; 150) with axially separated reference shoulders (22a, b; 62a, b; 94a, b; 115, 116, 150a, b), the axial length of the reference member matching the axial stress to be encountered in usage of the tubing;

—engaging a first pipe into one end of the collar (12) either to a selected depth of penetration if the collar is to be provided with a removable reference member (22), and afterwards inserting the removable reference member within the collar in abutment with the first pipe, or, if the collar (60) is provided with a fixed reference member (62), until the pipe end abuts against the fixed reference member, and

—engaging a second pipe into the second end of the collar into abutment with the facing surface of the reference member.

16. Method according to claim 15, characterized in that the coupling uses a standard A.P.I. collar having oppositely tapered threaded regions on each side of a central region and further including the steps of inserting internal and end seal means adjacent the threaded regions for contacting the engaged pipe.

17. Method according to claim 16, characterized in that the collar is modified by removing the central crest region to receive the internal seal and providing grooves in the collar end recess portions to receive the end seal means.

18. Method according to claim 17, characterized in that a reference member is entered from one end of the collar to provide an interior abutment surface for controlling the depth of penetration of the first pipe; the reference member is removed after insertion of the first pipe into contact with the interior abutment surface; and then the second pipe is engaged into contact with the reference member.

19. Method according to claim 18, characterized in that the collar and pipes are prescreened to determine that the tapers thereof are within selected manufactured tolerance limits.

20. Method according to claim 19, characterized in that the tapers of the collar and pipes are compared to reference surfaces to assure that the collar and pipes penetrate to within ±0,31 cm ($\frac{1}{8}$") with respect to selected standard profiles.

21. Method according to any one of claims 15 to 20, for providing precise, mechanically engaged and sealed couplings between collars and lengths of A.P.I. tubing or casing, characterized in that the tubing and collars are prescreened to provide tapers whose maximum net variation in engagement will be within ±0,63 cm ($\frac{1}{4}$ inch);

a collar configuration for a collar is selected having an internal precision makeup ring of selected axial length in the center of the collar, the axial length being determined by the axial stress to be encountered in usage of the tubing;

a first pipe is engaged into one end of the collar into metal-to-metal engagement with the precision makeup ring; and

thereafter a second pipe is engaged into the opposite end of the collar into metal-to-metal engagement with the precision makeup ring.

22. Method according to claim 21, characterized by the further step of isolating the threaded engagement regions between the collar and the tubing against internal and external pressures.

23. Method according to claim 22, characterized in that the threaded engagement regions are isolated by elastomerically sealing the space between the tubing and collar at each end of the threaded engagement region when the pipe nose is in metal-to-metal contact with the precision makeup ring.

24. Method according to any one of claims 16 to 23, characterized in that the sealing comprises compressing elastomeric material on full dimensional engagement of the associated pipe in the collar.

25. Method according to claim 24, characterized in that collars are prescreened to assure that the thread tapers thereof provide a selected depth of engagement with respect to a tapered reference surface.

**Patentansprüche**

1. Rohrverbindungsmuffe für Rundgewinde- oder Sägezahngewinderohre nach A.P.I.-Standard, wobei

—das Rohr (30, 40; 80, 81; 90; 100, 106; 156) ein Gewinde mit vorbestimmten, jedoch variierendem Durchmesser und Verjüngungsgrad in einem Gewindebereich aufweist, welcher am Vorderende in einer Schrägfläche und am gegenüberliegenden Ende in einem Gewindeauslaufbereich endet;

—die Muffe (12; 60; 99) gegenüberliegende sich verjüngende Gewindebereiche umfaßt, die von einem mittleren Bereich ausgehen und in Endausnehmungsbereichen enden, deren Innendurchmesser größer als der Außendurchmesser des eingeführten Rohres (30, 40; 80, 81; 90; 100, 106; 156) ist, wobei die Gewindebereiche der Muffe mit den Gewinden der Rohre zusammenpassen;

dadurch gekennzeichnet, daß die Muffe (12; 60; 99) versehen ist mit

—einem inneren mittigen Bezugsteil (22; 62; 94; 112; 150) mit axial beabstandeten Bezugsschultern (22a, b; 62a, b; 94a, b; 115, 116, 150a, b);

—mittigen Dichtvorrichtungen (20; 64; 65; 96; 98; 250), die gegenüberliegenden Seiten der Bezugsschultern (22a, b; 62a, b; 94a, b; 115, 116, 150a, b) benachbart sind;

—Endbereichs-Dichtvorrichtungen (26, 28; 74, 75), die jeweils in einem Endausnehmungsbereich (24; 70) der Muffe (12; 60; 99) angeordnet sind und das Rohr (30, 40; 80, 81; 90; 100, 106; 156) am gegenüberliegenden Ende des Gewindes (32; 42) dichtend berühren, wenn das Rohr (30, 40; 80, 81; 90; 100, 106; 156) vollständig bis zur Bezugsschulter (22a, b; 62a, b; 94a, b; 115, 116, 150a, b) eingeführt ist, so daß die mechanischen Eingriffsbereiche der Gewinde nicht durch Dichtungen unterbrochen werden und die Muffe (12; 60; 99) im Gewinde-Eingriffsbereich nicht geschwächt wird;

—und weiter dadurch gekennzeichnet, daß die Gewindebereiche der Muffe in die Rohregewinde mit dem gewünschten tragenden Eingriff eingreifen, wenn das Rohrende (34, 44; 92) mit der Bezugsschulter (22a, b; 62a, b; 94a, b; 115, 116, 150a, b) eingreift, während die mittigen Dichtvorrichtungen (20; 64; 65; 96, 98; 250) an der Schrägfläche (35) des Standardrohres (30, 40; 80, 81; 90; 100, 106; 156) am eingeführten Ende dichtend eingreifen.

2. Muffe nach Anspruch 1, dadurch gekennzeichnet, daß die Muffe eine A.P.I.-Muffe ist, deren mittiger Kranzbereich zur Festlegung eines mittigen zylindrischen Sitzbereiches (18) entfernt worden ist, wobei das Paar mittiger Dichtvorrichtungen einen inneren Dichtring (20) umfaßt, der im Sitzbereich (18) angeordnet ist und einen Mittelbereich von im wesentlichen konstantem Innendurchmesser sowie sich verjüngede Dichtflächen (20a, b) an jedem axialen Ende aufweist, und daß ein Positionspräzisierungs-Ringteil (22), welches das innere mittige Bezugsteil bildet, im inneren Dichtring (20) in Berührung mit diesem angeordnet ist und an gegenüberliegenden axialen Enden, nahe jeder der verschiedenen Dichtflächen (20a, b), mit den Bezugsschultern (22a, b) versehen ist.

3. Muffe nach Anspruch 1, dadurch gekennzeichnet, daß das innere mittige Bezugsteil ein mit der Muffe einstückiger metallener Ringbereich (62) ist, daß die Muffe weiterhin ein Paar innerer Dichtabschnitte (67, 68) umfaßt, welche dem Übergang zwischen den Bezugsschultern (62a, b) der Ringbereiches (62) und den zugeordneten benachbarten Gewindebereichen in der Muffe (60) benachbart sind, und daß die mittige Dichtvorrichtung ein Paar Ringdichtungen (64, 65) umfaßt, die jeweils in einem anderen Dichtabschnitt (67, 68) liegen.

4. Muffe nach einem der Ansprüche 1 bis 3 zur Aufnahme eines innenseitig kunststoffbeschichteten Rohres, dadurch gekennzeichnet, daß das innere mittige Bezugsteil (112) eine angeraute Innenfläche und eine Kunststoffbeschichtung (114) darauf aufweist, wobei sich die Kunststoffbeschichtung (114) wenigstens teilweise von der Innenseite um die Eche auf die Bezugsschultern (115, 116) erstreckt.

5. Muffe nach einem der Ansprüche 1 bis 4, dadurch gekennzeichnet, daß die die Bezugsschultern (150a, b) definierenden Flächen einzelne damit konzentrische Rippen (152, 153) umfassen, wobei die Rippen (152, 153) vom Vorderende eines Rohres (156) verformbar sind, dessen Endebene nicht genau parallel zur Ebene der Bezugsschultern (150a, b) ist.

6. Muffe nach einem der Ansprüche 1 bis 5, dadurch gekennzeichnet, daß die Muffe (99) für Rohre (90) mit abgerundeter Stirnkante (bulletnose) ausgelegt ist und das innere mittige Bezugsteil (94) konkave Bezugsschulterflächen (94a, b) aufweist, die mit den Enden (92) des Rohres (90) mit abgerundeter Stirnkante zusammenpassen, und daß das Paar mittiger Dichtvorrichtungen einen zweiteiligen mittigen Dichtring (96, 98) umfaßt, wobei ein mittiger Kranzbereich der Muffe (99) zur Bildung eines Sitzbereiches für den Dichtring entfernt worden ist, und wobei der mittige Dichtring (96) außerdem ein Profil aufweist, welches Dichtflächen (96a, 98a) an jedem seiner axialen Enden zum Zusammenpassen mit dem anstoßenden Bereich eines Rohres (90) mit abgerundeter Stirnkante ausbildet, so daß die Dichtflächen (96a, 98a) und das Bezugsteil (94) ohne Verformung der Dichtflächen (96a, 98a) in der Muffe (99) angeordnet werden können.

7. Muffe nach einem der Ansprüche 1 bis 5, dadurch gekennzeichnet, daß jede der mittigen Dichtvorrichtungen (20; 64; 65) einen Winkel von ungefähr 25° bezüglich der Achse der Muffe (12; 60) zum Eingriff mit der Schrägfläche (35) der in diese eingeführten Rohres (30, 40; 80, 81; 90; 100, 106; 156) aufweist.

8. Muffe nach Anspruch 7, dadurch gekennzeichnet, daß die Endbereichs-Dichtvorrichtungen (26, 28; 74, 75) in Endnuten (24; 72, 73) angeordnet sind, deren Seitenflächen unter einem eingeschlossenen Winkel von ungefähr 60° auseinanderstreben, um relativ zu den aufgenommenen Endbereichs-Dichtvorrichtungen (26, 28; 74, 75) einen großen Oberflächenbereich zu schaffen, so daß ein Reibungskontakt aufrechterhalten wird und die Endbereichs-Dichtvorrichtungen (26, 28; 74, 75) während des Einführens eines Rohres (30, 40; 80, 81; 90; 100, 106; 156) sich nicht verdrehen.

9. Muffe nach Anspruch 8, dadurch gekennzeichnet, daß die inneren Flächen der Endbereichs-Dichtvorrichtungen (26, 28; 74, 75) sich unter Winkeln verjüngen, die denen der Verjüngung des zugeordneten Gewindebereiches nahekommen, und worin der Innendurchmesser der Endbereichs-Dichtvorrichtungen (26, 28; 74, 75) hinreichend groß ist, um über wenigstens einen Teilabschnitt des Gewindebereichs eines Rohres (30, 40; 80, 81; 90; 100, 106; 156) treten zu können, welches darin aufgenommen ist.

10. Muffe nach einem der Ansprüche 1 bis 9, dadurch gekennzeichnet, daß die Endbereichs-Dichtvorrichtungen (26, 28; 74, 75) in Ansprache auf einen vorbestimmten Wert überschreitende Innendrücke auswärts verformbar sind, so daß Innendrücke abgelassen werden können.

11. Muffe nach Anspruch 10, dadurch gekennzeichnet, daß die Endberechs-Dichtvorrichtungen (26, 28; 74, 75) nach dem Ablassen eines Innendruckes in ihre Stellung zurückkehren, um eine Abdichtung gegenüber Außendrücken zu gewährleisten.

12. Muffe nach einem der Ansprüche 1 bis 11, dadurch gekennzeichnet, daß der Innenumfang des Bezugsteils (22; 62; 94; 112; 150) mit den Innenumfängen der Rohre (30, 40; 80, 81; 90; 100, 106; 156) fluchtet.

13. Muffe nach einem der Ansprüche 1 bis 12, dadurch gekennzeichnet, daß die Länge des Bezugsteils (22; 62; 94; 112; 150) innerhalb eines vorbestimmten Bereiches wählbar ist, um das dimensionierte Eingreifen in Übereinstimmung mit auftretenden axialen Belastungen zu regeln.

14. Muffe nach einem der Ansprüche 1 bis 13, dadurch gekennzeichnet, daß die Endbereichs-Dichtvorrichtungen (26, 28; 74, 75) so angeordnet sind, daß sie das Rohr (30, 40; 80, 81; 90; 100, 106; 156) ungefähr in dessen Gewindeauslaufbereich berühren.

15. Verfahren zur Verbindung von Rundgewinde- oder Sägezahnewinde-Rohrlängen (30, 40; 80, 81; 90; 100, 106; 156) gemäß A.P.I.-Standard mittels einer Muffe (12; 60; 99), gekennzeichnet durch folgende Schritte:

—Auswählen einer Muffe (12; 60; 99), in der ein inneres mittiges Bezugsteil (22; 62; 94; 112; 150) fest angeordnet ist oder entfernbar angeordnet werden kann, welches axial beabstandete Bezugsschultern (22a, b; 62a, b; 94a, b; 115, 116, 150a, b) aufweist, wobei die axiale Länge des Bezugsteils entsprechend den axialen Belastungen ausgelegt ist, die bei Verwendung der Rohre auftreten;

—Ineingriffbringen eines ersten Rohres in einem Ende der Muffe (12) entweder bis zu einer vorgewählten Eindringtiefe, wenn die Muffe mit einem entfernbaren Bezugsteil (22) versehen ist, worauf nachfolgend des entfernbare Bezugsteil in die Muffe bis zur Anlage am ersten Rohr eingesetzt wird, oder, wenn die Muffe (60) mit einem festen Bezugsteil (62) versehen ist, bis das Rohrende gegen das feste Bezugsteil anliegt, und

—Ineingriffbringen eines zweiten Rohres im zweiten Ende der Muffe bis zur Anlage an der gegenüberliegenden Fläche des Bezugsteils.

16. Verfahren nach Anspruch 15, dadurch gekennzeichnet, daß man als Rohrverbindung eine Muffe nach A.P.I.-Standard verwendet, welche gegenüberliegende, sich verjüngende Gewindebereiche zu beiden Seiten eines mittleren Bereiches aufweist, wobei das Verfahren außerdem die Schritte umfaßt, innere und Endbereichs-Dichtvorrichtungen den Gewindebereichen benachbart einzusetzen, die mit dem eingreifenden Rohr in Berührung stehen.

17. Verfahren nach Anspruch 16, dadurch gekennzeichnet, daß die Muffe durch Entfernung des mittigen Kranzbereiches zur Aufnahme der inneren Dichtvorrichtungen und durch die Eintiefung von Nuten in den Endausnehmungsbereichen der Muffe zur Aufnahme der Endbereichs-Dichtvorrichtungen abgewandelt ist.

18. Verfahren nach Anspruch 17, dadurch gekennzeichnet, daß von einem Ende der Muffe her ein Bezugsteil zur Ausbildung einer inneren Anschlagfläche eingesetzt ist, um die Eindringtiefe des erste Rohres festzulegun; daß das Bezugsteil nach Einführung des ersten Rohres bis zur Berührung mit der inneren Anschlagfläche wieder entfernt wird, und daß nachfolgend das zweite Rohr in Berührung mit dem Bezugsteil in Eingriff gebracht wird.

19. Verfahren nach Anspruch 18, dadurch gekennzeichnet, daß die Muffe und die Rohre einer Vorprüfung unterzogen werden, um festzulegen, daß ihre Verjüngungsgrade innerhalb ausgewählter Fertigungs-Toleranzgrenzen liegen.

20. Verfahren nach Anspruch 19, dadurch gekennzeichnet, daß die Verjüngungsgrade der Muffe und der Rohre mit Bezugsflächen verglichen werden, um sicherzustellen daß die Muffe und die Rohre bis auf $\pm 0,31$ cm ($\frac{1}{8}$") bezüglich ausgewählter Standardprofile eindringen.

21. Verfahren nach einem der Ansprüche 15 bis 20 zur Ausbildung präziser, mechanisch in Eingriff stehender und abgedichteter Rohrverbindung zwischen Muffen und A.P.I.-Rohrlängen, dadurch gekennzeichnet, daß die Rohre und Muffen einer Vorauswahl unterzogen werden, um Verjüngungsgrade zu erhalten, deren maximale Nettovariation bei Eingriff innerhalb von 0,63 cm ($\frac{1}{4}$ Inch) liegt; daß eine Muffenkonfiguration für eine Muffe ausgewählt wird, die einen inneren Präzisionsanpassungsring von vorgewählter axialer Länge in der Mitte der Muffe aufweist, wobei die axiale Länge von der Axialbelastung bestimmt wird, die bei Verwendung des Rohres auftritt; daß ein erstes Rohr in ein Muffenende bis zur Mettallauf-Metall-Berührung mit dem Präzisionsanpassungsring eingesetzt wird; und daß nachfolgend ein zweites Rohr in das gegenüberliegende Muffenende bis zur Metall-auf-Metall-Berührung mit dem Präzisionsanpassungsring in Eingriff gebracht wird.

22. Verfahren nach Anspruch 21, gekennzeichnet durch den weiteren Schritt, daß die Gewinde-Eingriffsbereiche zwischen Muffe und Rohren gegen innere und äußere Drücke abgedichtet werden.

23. Verfahren nach Anspruch 22, dadurch gekennzeichnet, daß die Gewinde-Eingriffsbereiche dadurch abgedichtet werden, daß der Zwischenraum zwischen Rohr und Muffe an jedem Ende des Gewinde-Eingriffsbereiches durch ein Elastomer abgedichtet ist, wenn die Rohrstirnkante in Metall-auf-Metall-Berührung mit dem Präzisionsanpassungsring steht.

24. Verfahren nach einem der Ansprüche 16 bis 23, dadurch gekennzeichnet, daß die Dichtung die Maßnahme umfaßt, daß bei vollem Dimensionierungseingriff des zugeordneten Rohres mit der Mufffe ein elastomeres Material komprimiert wird.

25. Verfahren nach Anspruch 24, dadurch gekennzeichnet, daß Muffen einer Vorauswahl unterzogen werden, um sicherzustellen, daß ihre Gewindeverjüngungsgrade eine vorgewählte Eingriffstiefe bezüglich einer sich verjüngenden Bezugsfläche ergeben.

## Revendications

1. Manchon d'accouplement de tiges pour tige API normalisée à filetage rond ou trapézoïdal;
—la tige (30, 40; 80, 81; 90; 100, 106; 156) comportant des filets de diamètre prédéterminé, mais variable et un cône dans une zone filetée aboutissant à un chanfrein à l'extrémité de nez et dans une zone de dernière strie à l'extrémité opposée;
—le manchon (12; 60; 99) comprenant des zones filetées de conicités opposées partant d'une zone centrale et aboutissant dans des parties évidées extrêmes qui ont des diamètres intérieurs plus grands que les diamètres extérieurs de la tige insérée (30, 40; 80, 81; 90; 100, 106; 156), les zones filetées du manchon s'accouplant avec les filets de la tige;
caractérisé en ce que le manchon (12; 60; 99) est équipé
—d'un élément intérieur de référence (22; 62; 94; 112; 150) disposé centralement et comportant des épaulements de référence (22a, b; 62a, b; 94a, -b; 115, 116, 150a, b) séparés axialement;
—de moyens centraux d'étanchéité (20; 64; 65; 96; 98; 250) adjacents à des côtés opposés des épaulements de référence (22a, b; 62a, b; 94a, b; 115, 116, 150a, b);
—de moyens extrêmes d'étanchéité (26, 28; 74, 75) disposés dans chacune des parties évidées extrêmes (24; 70) du manch (12; 60; 99) et portant contre la tige (30, 40; 80, 81; 90; 100, 106; 156) et en assurant l'étanchéité à l'extrémité opposée de sont filetage (32; 42) lorsque la tige (30, 40; 80, 81; 90; 100, 106; 156) est totalement insérée jusqu'aux épaulements de référence (22a, b; 62a, b; 94a, b; 115, 116, 150a, b), la zone de prise mécanique des filets n'étant pas interrompue par des joints d'étanchéité et le manchon (12; 60; 99) ne présentant aucun amincissement dans la zone de prise des filets;
—et en outre caractérisé en ce que les zones filetées du manchon sont en prise avec les filets de la tige, en contact d'appui souhaité, lorsque l'extrémité (34, 44; 92) de la tige porte contre l'épaulement de référence (22a, b; 62a, b; 94a, b; 115, 116, 150a, b), tandis que les moyens centraux d'étanchéité (20; 64; 65; 96, 98; 250) s'engagent dans et assurent l'étanchéité avec le chanfrein (35) de la tige normalisée (30, 40; 80, 81; 90; 100, 106; 156) à l'extrémité insérée.

2. Manchon selon la revendication 1, caractérisé en ce que le manchon (12) est un manchon A.P.I. comportant une zone de crête centrale enlevée définissant une zone d'appui cylindrique centrale (18), dans lequel la paire de moyens centraux d'étanchéité comprend une bague intérieure (20) d'étanchéité disposée à l'intérieur de la zone de siège (18) et ayant une zone centrale de diamètre intérieur sensiblement constant et des surfaces étanchéité coniques (20a, b) à chacune de ses extrémités axiales, et en ce qu'un élément annulaire de position de précision (22) formant l'élément intérieur de référence disposé centralement, est disposé à l'intérieur de la bague intérieure (20) e'étanchéité en contact avec elle, et comporte des épaulements de référence (22a, b) sur ses extrémités axiales opposées, à proximité de chacune des différentes surfaces d'étanchéité (20a, b).

3. Manchon selon la revendication 1, caractérisé en ce que l'élément intérieur de référence disposé centralement est une partie annulaire métallique (62) réalisée d'une seule pièce avec le manchon, en ce que le manchon (60) présente en outre une paire de zones de joints intérieures (67, 68) adjacentes à la jonction entre les épaulements de référence (62a, b) de la partie annulaire (62) et les parties filetées adjacentes respectives situées dans le manchon (60), et en ce que les moyens centraux d'étanchéité comprennent une paire de joints annulaires (64, 65) d'étanchéité disposés chacun dans l'une, différente, des zones de joints (67, 68).

4. Manchon selon l'une quelconque des revendications 1 à 3, dans lequel le manchon est destiné à recevoir une tige revêtue intérieurement de matière plastique, caractérisé en ce que l'élément intérieure (112) de référence disposé centralement présente un diamètre intérieur rendu rugueux et recouvert d'un revêtement (114) de matière plastique, le revêtement (114) de matière plastique s'étendant au moins partiellement du diamètre intérieur autour de l'angle jusque sur les épaulements de référence (115, 116).

5. Manchon selon l'une quelconque des revendications 1 à 4, caractérisé en ce que les surfaces définissant les épaulements de référence (150a, b) comprennent des arêtes individuelles (152, 153) qui leur sont concentriques, lesdits arêtes (152, 153) pouvant être déformées par l'extrémité avant d'une tige (156) dont le plan de l'extrémité n'est pas exactement parallèle au plan de l'épaulement de référence (150a, b).

6. Manchon selon l'une quelcone des revendications 1 à 5, caractérisé en ce que le manchon (99) est conçu pmur une tige (90) à bout rond, et l'élément intérieur (94) de référence disposé centralement présente des surfaces concaves (94a, b) d'épaulement de référence destinées à s'accoupler avec l'extrémité (92) du tube (90) à bout rond, et la paire de moyens centraux d'étanchéité comprend une bague centrale (96, 98) d'étanchéité en deux parties, le manchon (99) comprenant une zone de crête centrale enlevée définissant une zone de siège d'une bague d'étanchéité, la bague centrale d'étanchéité (96) comprenant en outre un profil formant des surfaces de joints (96a, 98a) à chacune de ses extrémités axiales, destinées à s'accoupler avec la partie de butrée d'une tige (90) à bout rond, de manière que les surfaces de joints (96a, 98a, et l'element de référence (94) puissent être positionnés à l'intérieur du manchon (99) sans déformation des surfaces de joints (96a, 98a).

7. Manchon selon l'une quelconque des revendications 1 à 5, caractérisé en ce que chacun des moyens centraux d'étanchéité (20; 64; 65) forme un angle d'environ 25° avec l'axe du manchon (12; 60) afin de porter contre le chanfrein (35) de la tige (30, 40; 80, 81; 100, 106; 156) devant y être insérée.

8. Manchon selon la revendication 7, caractérisé en ce que les moyens extrêmes d'étanchéité (26, 28; 74, 75) sont disposés dans des gorges extrêmes (24; 72, 73) à surfaces latérales divergentes et formant entre elles un angle d'environ 60° pour présenter une aire de surface importante par rapport aux moyens extrêmes d'étanchéité reçus (26, 28; 74, 75) de façon à maintenir un contact de frottement pour que les moyens extrêmes d'étanchéité (26, 28; 74, 75) ne tournent pas pendant l'insertion d'une tige (30, 40; 80, 81; 90; 100, 106; 156).

9. Manchon selon la revendication 8, caractérisé en ce que les surfaces intérieures des moyens extrêmes d'étanchéité (26, 28; 74, 75) forment des cônes dont les angles correspondent approximativement à ceux du cône de la zone filetée associée, et dans lequel le diamètre intérieur des moyens extrêmes d'étanchéité (26, 28; 74, 75) est suffisamment grand pour passer au-dessus d'au moins une partie de la zone filetée d'une tige (30, 40; 80, 81; 90; 100, 106; 156) qui y est reçue.

10. Manchon selon l'une quelconque des revendications 1 à 9, caractérisé en ce que les moyens extrêmes d'étanchéité (26, 28; 74, 75) peuvent être déformés vers l'extérieur en réponse à des pressions internes dépassant un niveau prédéterminé, afin d'assurer une décharge des pressions internes.

11. Manchon selon la revendication 10, caractérisé en ce que les moyens extrêmes d'étanchéité (26, 28; 74, 75) reviennent vers une position d'obturation étanche vis-à-vis des pressions externes après la décharge.

12. Manchon selon l'une quelconque des revendications 1 à 11, caractérisé en ce que la circonférence intérieure de l'élément de référence (22; 62; 94; 112; 150) s'étend à fleur de la circonférence intérieure des tiges (30, 40; 80, 81; 90; 100, 106; 156).

13. Manchon selon l'une quelconque des revendications 1 à 12, caractérisé en ce que la longueur de l'élément de référence (22; 62; 94; 112; 150) peut être choisie dans une plage prédéterminée pour régler la prise dimensionnelle en fonction de l'effort axial à supporter.

14. Manchon selon l'une quelconque des revendications 1 à 13, caractérisé en ce que les moyens extrêmes d'étanchéité (26, 28; 74, 75) sont disposés de façon à entrer en contact avec la tige (30, 40; 80, 81; 90; 100, 106; 156) approximativement dans la zone de sa dernière strie.

15. Procédé pour accoupler des longueurs de tige A.P.I. normalisée (30, 40; 80, 81; 90; 100, 106; 156) à filetage rond ou trapézoïdal au moyen d'un manchon (12; 60; 99), caractérisé par les étapes qui consistent

— à choisir un manchon (12; 60; 99) équipé d'un élément interne fixe ou pouvant être équipé d'un élément interne amovible de référence (22; 62; 94; 112; 150) disposé centralement et comportant des épaulements de référence (22a, b; 62a, b; 94a, b; 115, 116, 150a, b) séparés axialement, la longueur axiale de l'élément de référence correspondant à l'effort axial à supporter lors de l'utilisation de la colonne;

— à engager une première tige dans une premiere extrémité du manchon (12), soit jusqu'à une profondeur choisie de pénétration si le manchon doit être équipé d'une élément amovible (22) de référence, après quoi l'élément amovible de référence est introduit dans la manchon, en butée contre la première tige, soit, si le manchon (60) est équipé d'un élément fixe (62) de référence, jusqu'à ce que l'extrémité de la tige bute contre l'élément fixe de référence; et

— à engager une seconde tige dans la seconde extrémité du manchon jusqu'à ce qu'elle bute contre la surface en vis-à-vis de l'élément de référence.

16. Procédé selon la revendication 15, caractérisé en ce que l'accouplement utilise un manchon A.P.I. normalisé comportant des zones filetées de conicités opposées de chaque côté d'une zone centrale et consistant en outre à insérer des moyens internes et extrêmes d'étanchéité à proximité immédiate des zones filetées afin qu'ils entrent en contact avec la tige engagée.

17. Procédé selon la revendication 16, caractérisé en ce que le manchon est modifié par un enlèvement de la zone de crête centrale afin de recevoir le joint d'étanchéité interne et la réalisation de gorges dans les parties évidées extrêmes du manchon pour recevoir les moyens extrêmes d'étanchéité.

18. Procédé selon la revendication 17, caractérisé en ce qu'un élément de référence est introduit à partir d'une première extrémité du manchon pour former une surface intérieure de butée destinée à limiter la profondeur de pénétration de la première tige; l'élément de référence est retiré après l'insertion de la première tige jusqu'à ce qu'elle soit en contact avec la surface intérieure de butée; puis la seconde tige est engagee jusqu'à ce qu'elle soit en contact avec l'élément de référence.

19. Procédé selon la revendication 18, caractérisé en ce que le manchon et les tiges sont préalablement triés afin de déterminer que leurs conicités se trouvent fans des limites choisies de tolérances de fabrication.

20. Procédé selon la revendication 19, caractérisée en ce que les conicités du manchon et des tiges sont comparées à des surfaces de référence pour assurer que le manchon et les tiges pénètrent en deçà de ±0,31 cm ($\frac{1}{8}''$) par rapport à des profils normalisés choisis.

21. Procédé selon l'une quelconque des revendications 15 à 20, pour la réalisation d'accouplements précis, en prise mécanique et étanches entre des manchons et des longueurs de tubage ou de colonne de production A.P.I.;

caractérisé en ce que la colonne de production et les manchons sont préalablement triés pour présenter des conicités dont la variation nette maximale en prise est en deçà de ±0,63 cm ($\frac{1}{4}$ inch);

il est choisi pour un manchon une configuration ayant une bague interne de raccordement de précision d'une longueur axiale choisie dans le centre du manchon, la longueur axiale étant déterminée par l'effort axial devant être supporté lors de l'utilisation de la colonne de production; une première tige est engagée dans une première extrémité du manchon en contact métal sur métal avec la bague de raccordement de précision; et

une seconde tige est ensuite engagée dans l'extrémité opposée du manchon en contact métal sur métal avec la bague de raccordement de précision.

22. Procédé selon la revendication 21, caractérisé en ce qu'il consiste en outre à isoler des pressions internes et externes les zones de prise vissée entre le manchon et la colonne de production.

23. Procédé selon la revendication 22, caractérisé en ce que les zones de prise vissée sont isolées par l'obturation étanche, au moyen d'un élastomère, de l'espace comprise entre la colonne de production et le manchon à chaque extrémité de la zone de prise vissée lorsque le bout de la tige est en contact métal sur métal avec la bague de raccordement de précision.

24. Procédé selon l'une quelconque des revendications 16 à 23, caractérisé en ce que l'obturation étanche comprend une compression d'une matière élastomérique lors de l'engagement dimensionnel total de la tige associée dans le manchon.

25. Procédé selon la revendication 24, caractérisé en ce que les manchons sont préalablement triés pour assurer que leurs cônes filetés établissent une profondeur d'engagement choisie par rapport à une surface conique de référence.

FIG. 1

FIG. 5

FIG.2

0 094 509

FIG. 3

FIG. 4

ROOT HELIX

3

FIG. 6

FIG.7

FIG.8

FIG.9

FIG.10

FIG. II

0 094 509

FIG. 12

FIG. 13

9

FIG.14

FIG. 15

FIG.16

FOR
MANUFACTURED
COLLARS

PIPE PRE-
SCREENED
FOR TAPER

FOR
MODIFIED
COLLARS

FABRICATE
COLLAR SETS
INCLUDING
SEALS

PRE-SCREEN
COLLARS
FOR TAPER

SELECT
COLLAR HAVING
DESIRED LENGTH
OF
MAKEUP RING

REMOVE
CENTER CREST
AND PROVIDE
END RECESS
GROOVES

INSERT
FIRST
PIPE

INSERT SEALS
AND SELECT
MAKEUP RING
OF
DESIRED LENGTH

PRESET FIRST
PIPE WITH
PRESET PLUG

REMOVE
PRESET PLUG

INSERT
SELECTED
MAKEUP RING

COMPLETED
COUPLING BY
ENGAGING
SECOND PIPE
TO METAL-TO-
METAL CONTACT

AT PIPE
RACK
OR
STORAGE

FIG. 17

ᒪON
RIG
FLOOR

12